# EUROPÄISCHE PATENTSCHRIFT

(11) **EP 1 323 933 B1**
(45) Veröffentlichungstag und Bekanntmachung des Hinweises auf die Patenterteilung: **08.12.2004**
(21) Anmeldenummer: 02026298.6
(22) Anmeldetag: 27.11.2002
(51) Int. Cl.: E05D 15/06, F16B 5/02

(54) **Halterung für eine langgestreckte Profilschiene aus einem nach unten hin offenen C-Profil**
Support for an elongated rail having a C-profile with its opening directed downwardly
Fixation pour un rail allongé ayant un profil en C avec l'ouverture dirigée vers le bas

(30) Priorität: 29.12.2001 DE 20121044 U
(43) Veröffentlichungstag der Anmeldung: 02.07.2003
(73) Patentinhaber: Hespe & Woelm GmbH & Co. KG, 42579 Heiligenhaus (DE)
(72) Erfinder: Gessner, Ulrich, 42579 Heiligenhaus (DE)
(74) Vertreter: Stenger, Watzke & Ring Patentanwälte

(56) Entgegenhaltungen:
- AT-B- 282 397
- CH-A- 532 726
- DE-U- 29 908 332

## Beschreibung

Die Erfindung betrifft eine Halterung für eine langgesteckte Profilschiene aus einem nach unten hin offenen C-Profil, wobei sich die Halterung aus einer die Profilschiene an mindestens drei Seiten umgebenden, aus einem Profilabschnitt bestehenden Muffe sowie einem mit der Muffe verbundenen Montageelement zusammensetzt, durch das die Halterung an einer Wand oder einer Decke befestigbar ist. Eine solche Halterung ist aus der AT 282 397 B bekannt.

Derartige Profilschienen werden für unterschiedlichste Zwecke eingesetzt und weisen demgemäß unterschiedlichste Formen auf. Beispielsweise werden zum horizontalen Führen von zum Beispiel Türen, Toren, Fensterläden und dergleichen nach unten offene C-Profile eingesetzt, vgl. AT 282 397 B.

Im Stand der Technik sind Haltevorrichtungen bekannt, bei denen die Profilschiene von einer Muffe umgeben ist, um die Profilschiene in einer definierten Stellung zu halten. Dabei umschließt die Muffe die Profilschiene an mindestens drei Seiten derart, daß die Öffnung des C-Profils weiterhin von Außen zugänglich bleibt. An die Außenseite der Muffe ist ein mit Befestigungsbohrungen versehenes Montageblech angeschweißt, mit dem die Muffe an einer Wand oder einer Decke befestigt werden kann.

Gerade bei einer Montage der Halterung an eine Decke ist nachteilig, daß vor der Montage die Befestigungsstellen genau ausgemessen und die Bohrungen exakt gesetzt werden müssen und ferner die auf die Profilschiene aufgeschobenen Halterungen mittels Befestigungsschrauben unmittelbar befestigt werden müssen. Dies ist in der Regel, insbesondere bei langen und/oder schweren Profilschienen, nur mit mehreren Monteuren handhabbar.

Der Erfindung liegt die Aufgabe zugrunde, eine Halterung für eine Profilschiene zu schaffen, durch die eine positionsgenaue Montage erleichtert wird.

Zur Lösung der Aufgabe wird vorgeschlagen, daß das Montageelement eine sich parallel und im Abstand zur Muffe erstreckende Montageplatte aufweist, die sich mit einer ihrer Flachseiten an der Wand oder der Decke abstützt und eine Öffnung in Gestalt eines Langlochs für eine Schraube aufweist, die sich mit ihrem Schraubenkopf gegen die der Flachseite abgewandten Flachseite abstützt, wobei die Montageplatte mit einer zusätzlichen, sich vom Langloch bis zu einem der Ränder der Montageplatte erstreckenden Ausnehmung, die breiter als der Schraubenschaft ist, versehen ist.

Vorteilhaft kann die an der Profilschiene befestigte Halterung an einer an der Decke vorgesehenen Schraube vorab eingehängt werden. Die Schraube kann vor dem Befestigen der Halterung an der Decke in einer geeigneten Weise an der Decke angeordnet werden. So kann die Halterung zunächst an einer Stelle provisorisch eingehängt werden und gleichzeitig ausreichend Spielraum erlauben, um weitere Halterungen an entsprechende weitere Schrauben einzuhängen. Die Halterung rutscht trotz nicht angezogener Schraube nicht ab, so daß die Montage auch mit nur einem Monteur ausgeführt werden kann. Hängt die Profilschiene über die Halterungen an der Decke, kann die Anordnung entsprechend der Gestaltung des Langlochs noch nachträglich ausgerichtet werden, bevor die Schrauben festgedreht werden. Auch bei hohen Decken, wie beispielsweise in Industriehallen und dergleichen, kann eine einfache, kostengünstige Montage erreicht werden. Darüber hinaus kann eine Montage auch dann ausgeführt werden, wenn zum Beispiel nur ein Hubwagen oder eine geeignete Leiter für die Deckenmontage vorhanden ist.

Es wird ferner vorgeschlagen, daß die Ausnehmung in der Mitte des Langlochs auf das Langloch trifft. So kann eine Abweichung der Position der Befestigungsschraube durch eine entsprechende Positionierung im Langloch ausgeglichen werden.

Um eine Abweichung der Position quer zur Profilschiene ausgleichen zu können, wird vorgeschlagen, daß das Langloch quer zur Längsachse des Muffenprofils angeordnet ist.

Mit Vorteil wird ferner vorgeschlagen, daß sich die Ausnehmung längs zur Längsachse des Muffenprofils erstreckt. So kann die auf dem C-Profil verschiebbar gelagerte Muffe in Längsrichtung derart verschoben werden, daß eine in der Decke vorbefestigte Schraube in die Ausnehmung bis zum Langloch eingeführt wird.

In einer weiteren Ausgestaltung wird vorgeschlagen, daß zwischen dem Schraubenkopf und der Flachseite eine Unterlegscheibe vorgesehen ist. Dabei kann eine an der Schraube befestigte Unterlegscheibe über die Ausformung hinweggleiten und durch Abstützen an einem von diesem gebildeten Absatz gegen Zurückgleiten gesichert werden. Die Unterlegscheibe kann dazu vorteilhaft die wirkenden Kräfte von der Halterung auf die Schraube übertragen sowie Abweichungen in der Ebenheit der Anordnung ausgleichen.

Es wird ferner vorgeschlagen, daß an der Flachseite mindestens ein Vorsprung in Richtung auf die Muffe angeordnet ist, gegen den die Unterlegscheibe mit ihrer der Ausnehmung zugewandten Stirnseite anlegbar ist. Die Schraube kann über den Vorsprung gleiten. Durch die Gewichtskraft der Profilschiene kann die Schraube auf diese Weise gegen Zurückgleiten gesichert werden. Es können aber auch mehrere Vorsprünge vorgesehen sein, beispielsweise auf jeder Seite der Ausnehmung einer.

Darüber hinaus wird vorgeschlagen, daß die Unterlegscheibe im wesentlichen rechteckförmig ist. Damit kann die Unterlegscheibe eine günstige Anlagefläche zum Anliegen am Vorsprung bilden. Insbesondere bei mehreren Vorsprüngen der Flachseite kann eine Kraft in Längsrichtung, die ein Abrutschen bewirken würde, auf mehrere Vorsprünge möglichst gleichmäßig verteilt werden. So lassen sich auch große Kräfte sicher abfangen.

In einer weiteren Ausgestaltung wird vorgeschlagen, daß die Montageplatte aus einem Profilabschnitt eines U-Profils besteht, wobei einer der Schenkel des U-Profils die Montageplatte bildet und der andere mit der Muffe verbunden ist. Vorteilhaft kann ein einfacher Aufbau der Halterung erreicht werden, indem die Haltung aus nur zwei Bauteilen zusammengesetzt ist. Die Verwendung eines Profils sowohl für die Muffe als auch für die Montageplatte kann eine günstige Serienfertigung ermöglichen. Darüber hinaus können jedoch auch andere Profilformen in Abhängigkeit des Anwendungsfalls verwendet werden, wie beispielsweise ein V-förmiges Profil oder auch ein L-förmiges Profil.

Mit Vorteil wird vorgeschlagen, daß das Montageelement und die Muffe einstückig ausgebildet sind. Arbeitsschritte bei der Herstellung der Halterung können eingespart und eine hohe Belastbarkeit der Halterung kann erreicht werden.

Ferner wird vorgeschlagen daß die Montageplatte auf der von der Muffe abgewandten Seite zumindest eine Ausformung, Ausprägung oder Sicke aufweist. Damit kann ein Verrutschen der Halterung gegenüber der Decke oder auch ein Verdrehen, beziehungsweise Verkanten der Halterung beim Ausrichten und/oder Festschrauben vermieden werden.

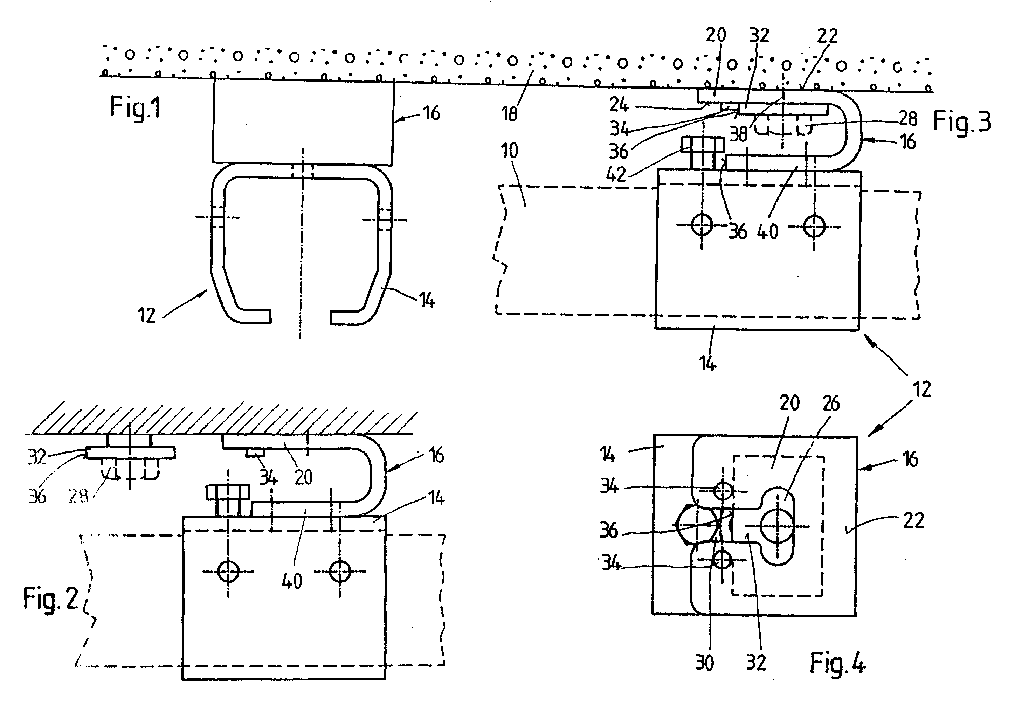

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen.

Es zeigen:
- Fig. 1: eine Längsansicht einer erfindungsgemäßen Halterung mit einer an einer Muffe befestigten Montageplatte,
- Fig. 2: eine Seitenansicht der Halterung in Fig. 1 vor einer Montage an einer Decke,
- Fig. 3: die an der Decke befestigte Halterung in Fig. 2 und
- Fig. 4: eine Draufsicht auf die Halterung in Fig. 1.

Fig. 1 zeigt eine Halterung 12 für eine langgesteckte, in dieser Ansicht nicht dargestellte Profilschiene 10 aus einem nach unten hin offenen C-Profil. In der Profilschiene 10 ist ein Rollapparat geführt, zum Beispiel der Rollapparat eines hängenden Tores. Die Halterung 12 setzt sich aus einer die Profilschiene 10 an mindestens drei Seiten umgebenden, aus einem Profilabschnitt bestehenden Muffe 14 sowie einem mit der Muffe 14 verbundenen Montageelement 16 zusammen, durch das die Halterung 12 an einer Decke 18 befestigbar ist.

Das Montageelement 16 weist eine sich parallel und im Abstand zur Muffe 14 erstreckende Montageplatte 20 auf, die sich mit einer ihrer Flachseiten 22, 24 an der Decke 18 abstützt (Fig. 3). Diese weist eine Öffnung 26 in Gestalt eines Langlochs für eine Schraube 28 auf, die sich mit ihrem Schraubenkopf gegen die der deckenseitigen Flachseite 22 abgewandte Flachseite 24 indirekt über eine Unterlegscheibe 32 abstützt. Die Montageplatte 20 ist mit einer zusätzlichen, sich vom Langloch 26 bis zu einem der Ränder der Montageplatte 20 erstreckenden Ausnehmung 30, die breiter als der Schraubenschaft ist, versehen. Die Ausnehmung 30 trifft in der Mitte des Langlochs 26 auf das Langloch 26, wobei das Langloch 26 quer zur Längsachse des Muffenprofils 14 angeordnet ist. Die Ausnehmung 30 erstreckt sich längs zur Längsachse des Muffenprofils 14.

Zwischen dem Schraubenkopf 28 und der Flachseite 22 ist eine Unterlegscheibe 32 vorgesehen. Darüber hinaus sind an der Flachseite 24 zwei Vorsprünge 34 in Richtung auf die Muffe 14 angeordnet, gegen den die Unterlegscheibe 32 mit ihrer der Ausnehmung 30 zugewandten Stirnseite 36 anlegbar ist. Die Unterlegscheibe 32 ist im wesentlichen rechteckförmig (Fig. 4). Fig. 2 zeigt die Halterung 12, kurz bevor sie auf die Schraube 28 geschoben wird.

Die Montageplatte 20 besteht aus einem Profilabschnitt eines U-Profils, wobei einer der Schenkel 38 des U-Profils die Montageplatte 20 bildet und der andere 40 mit der Muffe 14 verbunden ist.

Die Montage einer Profilschiene 10 verläuft wie folgt:

Zunächst werden in die Decke 22 in vorgegebenen Abständen Bohrungen eingebracht, in die jeweils eine Befestigungsschraube 28 mit einer Unterlegscheibe 32 eingeschraubt werden. Die Schrauben 28 sind etwa mit der halben Gewindelänge eingeschraubt.

Auf der Profilschiene 10 wird eine vorgegebene Anzahl von erfindungsgemäßen Halterungen 12 an einem Ende der Profilschiene 10 axial aufgeschoben. Eine erste Halterung 12 wird in einer vorgegebenen axialen Stellung auf der Profilschiene positioniert und mittels einer Schraube 42 fixiert. In die Ausnehmung 30 dieser Halterung 12 wird anschließend in die zugehörige Schraube 28 eingeführt, so daß die Stirnfläche 36 der Unterlegscheibe 32 am Vorsprung 34 anliegt. Die nun schräg nach unten hängende Profilschiene ist über die Halterung 12 gehalten. Ein Abrutschen der Halterung 12 von der Schraube 28 ist durch die Anlage der Unterlegscheibe 32 am Vorsprung 34 verhindert.

Im weiteren Verlauf werden nun die anderen Halterungen 12 an den entsprechenden Schrauben 28 eingehängt. Dazu wird das herunterhängende Ende der Profilschiene 10 angehoben und die Halterungen 12 in eine entsprechende Montageposition axial verschoben, so daß bei angehobener Profilschiene 10 die Befestigungsschrauben 28 in die Ausnehmungen 30 der Halterungen 12 eingeführt werden können. Vorzugsweise wird nun die am anderen Ende der Profilschiene 10 angeordnete Halterung 12 als nächste mit ihrer zugehörigen Befestigungsschraube 28 verbunden. Damit ist die Profilschiene 10 provisorisch an der Decke 22 aufgehängt. Als nächstes werden die weiteren Halterungen 12 entsprechend eingehängt.

Jede Halterung 12 wird nacheinander derart ausgerichtet, daß die Profilschiene 10 ihre vorgegebene Position quer zur Längsrichtung einnimmt. Nun werden die weiteren Schrauben 28 nacheinander festgezogen.

Anschließend wird die Schraube 42 der ersten Halterung 12 geöffnet und die Profilschiene 10 axial ausgerichtet. Nach erreichen der korrekten axialen Position wird die Schraube 42 wieder angezogen. Zuletzt wird die Profilschiene 10 durch Festziehen der Schrauben 42 axial in ihrer Position fixiert.

Bei einer Demontage kann in entsprechend umgekehrter Reihenfolge Verfahren werden, wobei die auf die Ausrichtung bezogenen Schritte entfallen können.

### Bezugszeichenliste

- 10: Profilschiene
- 12: Halterung
- 14: Muffe
- 16: U-Profil
- 18: Decke
- 20: Montageplatte
- 22: Flachseite
- 24: Flachseite
- 26: Langloch
- 28: Schraube
- 30: Ausnehmung
- 32: U-Scheibe
- 34: Vorsprung
- 36: Stirnseite der U-Scheibe
- 38: Schenkel
- 40: Schenkel
- 42: Schraube

## Patentansprüche

1. Halterung für eine langgesteckte Profilschiene (10) aus einem nach unten hin offenen C-Profil, wobei sich die Halterung (12) aus einer die Profilschiene (10) an mindestens drei Seiten umgebenden, aus einem Profilabschnitt bestehenden Muffe (14) sowie einem mit der Muffe (14) verbundenen Montageelement (16) zusammensetzt, durch das die Halterung an einer Wand oder einer Decke (18) befestigbar ist,
**dadurch gekennzeichnet,**
**daß** das Montageelement (16) eine sich parallel und im Abstand zur Muffe (14) erstreckende Montageplatte (20) aufweist, die sich mit einer ihrer Flachseiten (22, 24) an der Wand oder der Decke (18) abstützt und eine Öffnung (26) in Gestalt eines Langlochs für eine Schraube (28) aufweist, die sich mit ihrem Schraubenkopf gegen die der Flachseite (22) abgewandten Flachseite (24) abstützt, wobei die Montageplatte (20) mit einer zusätzlichen, sich vom Langloch (26) bis zu einem der Ränder der Montageplatte erstreckenden Ausnehmung (30), die breiter als der Schraubenschaft ist, versehen ist.

2. Halterung nach Anspruch 1, **dadurch gekennzeichnet, daß** die Ausnehmung (30) in der Mitte des Langlochs (26) auf das Langloch (26) trifft.

3. Halterung nach Anspruch 1 oder 2, **dadurch gekennzeichnet, daß** das Langloch (26) quer zur Längsachse des Muffenprofils (14) angeordnet ist.

4. Halterung nach Anspruch 3, **dadurch gekennzeichnet, daß** sich die Ausnehmung (30) längs zur Längsachse des Muffenprofils (14) erstreckt.

5. Halterung nach einem der vorhergehenden Ansprüche, **dadurch gekennzeichnet, daß** zwischen Schraubenkopf (28) und Flachseite (22) eine Unterlegscheibe (32) vorgesehen ist.

6. Halterung nach einem der vorhergehenden Ansprüche, **dadurch gekennzeichnet, daß** an der Flachseite (24) mindestens ein Vorsprung (34) in Richtung auf die Muffe (14) angeordnet ist, gegen den die Unterlegscheibe (32) mit ihrer der Ausnehmung (30) zugewandten Stirnseite (36) anlegbar ist.

7. Halterung nach Anspruch 5 oder 6, **dadurch gekennzeichnet, daß** die Unterlegscheibe (32) im wesentlichen rechteckförmig ist.

8. Halterung nach einem der vorhergehenden Ansprüche, **dadurch gekennzeichnet, daß** die Montageplatte (20) aus einem Profilabschnitt eines U-Profils besteht, wobei einer der Schenkel (38) des U-Profils die Montageplatte (20) bildet und der andere (40) mit der Muffe (14) verbunden ist.

9. Halterung nach einem der vorhergehenden Ansprüche, **dadurch gekennzeichnet, daß** das Montageelement (16) und die Muffe (14) einstückig ausgebildet sind.

10. Halterung nach einem der vorhergehenden Ansprüche, **dadurch gekennzeichnet, daß** die Montageplatte (20) auf der von der Muffe (14) abgewandten Seite (22) zumindest eine Ausformung, Ausprägung oder Sicke aufweist.

## Claims

1. Support for an elongate profiled rail (10) consisting of a downwardly open C-section, wherein the support (12) comprises a collar (14) consisting of a profiled section which surrounds the profiled rail (10) on at least three sides as well as a mounting element (169) which is connected to the collar (14) and by which the support can be fixed on a wall or a ceiling (18), **characterised in that** the mounting element (16) has a mounting plate which extends parallel to and spaced from the collar (14), is supported by one of its flat faces (22, 24) on the wall or the ceiling (18) and has an opening (26) in the shape of a slot for a screw (28) which is supported with its screw head against the flat face (24) facing away from the flat face (22), the mounting plate (20) being provided with an additional recess (30) which extends from the slot (26) up to one of the edges of the mounting plate and is wider than the screw shank.

2. Support as claimed in Claim 1, **characterised in that** the recess (30) meets the slot (26) in the middle of the slot (26).

3. Support as claimed in either Claim 1 or Claim 2, **characterised in that** the slot (26) is disposed transversely with respect to the longitudinal axis of the collar profile (14).

4. Support as claimed in Claim 3, **characterised in that** the recess (30) extends along the longitudinal axis of the collar profile (14).

5. Support as claimed in any one of the preceding claims, **characterised in that** a washer (32) is provided between the screw head (28) and the flat face (22).

6. Support as claimed in any one of the preceding claims, **characterised in that** on the flat face (24) at least one projection (34) is disposed in the direction of the collar (14) and the washer (32) can be set against this projection with its end face (36) facing the recess (30).

7. Support as claimed in either Claim 5 or Claim 6, **characterised in that** the washer (32) is substantially rectangular.

8. Support as claimed in any one of the preceding claims, **characterised in that** the mounting plate (20) consists of a profiled section of a U-section, wherein one of the flanks (38) of the U-section forms the mounting plate and the other (40) is connected to the collar (14).

9. Support as claimed in any one of the preceding claims, **characterised in that** the mounting element (16) and the collar (14) are constructed in one piece.

10. Support as claimed in any one of the preceding claims, **characterised in that** the mounting plate (20) has at least one moulded or embossed projection or bead on the face (22) facing away from the collar (14).

## Revendications

1. Fixation pour un rail profilé allongé (10) ayant un profil en C avec l'ouverture dirigée vers le bas, la fixation (12) étant constituée d'un manchon (14) entourant le rail profilé (10) sur au moins trois côtés et se composant d'une section profilée ainsi que d'un élément de montage (16) relié avec le manchon (14) et avec lequel la fixation peut être fixée sur une paroi ou à un plafond (18), **caractérisée en ce que** l'élément de montage (16) comprend une platine de montage (20) s'étendant parallèlement au manchon (14) et avec un espacement par rapport à celui-ci, laquelle platine de montage s'appuie avec un de ses côtés plats (22, 24) sur la paroi ou au plafond (18) et comprend une ouverture (26) sous la forme d'un trou oblong pour une vis (28) qui s'appuie avec sa tête sur le côté plat (24) opposé au côté plat (22), la platine de montage (20) étant munie d'un évidement supplémentaire (30) qui s'étend depuis le trou oblong (26) jusqu'à un des bords de la platine de montage et qui est plus large que la tige de la vis.

2. Fixation selon la revendication 1, **caractérisée en ce que** l'évidement (30) aboutit dans le trou oblong (26) au milieu de celui-ci.

3. Fixation selon la revendication 1 ou 2, **caractérisée en ce que** trou oblong (26) est disposé transversalement à l'axe longitudinal du profil du manchon (14).

4. Fixation selon la revendication 3, **caractérisée en ce que** l'évidement (30) s'étend dans le sens longitudinal par rapport à l'axe longitudinal du profil du manchon (14).

5. Fixation selon l'une quelconque des revendications précédentes, **caractérisée en ce qu'**une rondelle (32) est prévue entre la tête de vis (28) et le côté plat (22).

6. Fixation selon l'une quelconque des revendications précédentes, **caractérisée en ce que** sur le côté plat (24) est disposée en direction du manchon (14) au moins une partie en saillie (34), contre laquelle la rondelle (32) peut s'appuyer avec son côté frontal (36) dirigé vers l'évidement (30).

7. Fixation selon la revendication 5 ou 6, **caractérisée en ce que** la rondelle (32) a sensiblement une forme rectangulaire.

8. Fixation selon l'une quelconque des revendications précédentes, **caractérisée en ce que** la platine de montage (20) se compose d'une section profilée d'un profilé en U, une des ailes (38) du profilé en U formant la platine de montage (20) et l'autre aile (40) étant reliée avec le manchon (14).

9. Fixation selon l'une quelconque des revendications précédentes, **caractérisée en ce que** l'élément de montage (16) et le manchon (14) sont réalisés d'une seule pièce.

10. Fixation selon l'une quelconque des revendications précédentes, **caractérisée en ce que** la platine de montage (20) comprend sur le côté (22) opposé au manchon (14) au moins une partie mise en forme, une empreinte en relief ou une moulure.
